# EUROPÄISCHE PATENTSCHRIFT

(11) **EP 2 782 212 B1**
(45) Veröffentlichungstag und Bekanntmachung des Hinweises auf die Patenterteilung: **09.05.2018**
(21) Anmeldenummer: 14160694.7
(22) Anmeldetag: 19.03.2014
(51) Int. Cl.: H02J 9/02, H05B 37/00, H05B 37/02

(54) **Beleuchtungssystem und Leuchte mit Notlichtfunktion**
Illumination system and luminaire with an emergency light function
Système d'éclairage et lampe avec fonction d'éclairage de secours

(30) Priorität: 22.03.2013 DE 102013205119; 01.07.2013 DE 102013212789
(43) Veröffentlichungstag der Anmeldung: 24.09.2014
(73) Patentinhaber: Zumtobel Lighting GmbH, 6850 Dornbirn (AT)
(72) Erfinder: Klocker, Bernhard, 6850 Dornbirn (AT); Johler, Günther, 6850 Dornbirn (AT)
(74) Vertreter: Thun, Clemens

(56) Entgegenhaltungen:
- EP-A1- 2 194 762
- EP-A2- 1 578 176
- EP-A2- 1 619 935
- WO-A2-2009/114889
- DE-A1-102010 003 797
- DE-A1-102010 016 392

## Beschreibung

Die vorliegende Erfindung betrifft ein Beleuchtungssystem gemäß dem Oberbegriff des Anspruchs 1, welches eine Notlichtfunktion aufweist. Ferner betrifft die vorliegende Erfindung ein Verfahren zum Betreiben eines entsprechenden Beleuchtungssystems. Größere Beleuchtungssysteme, die zum Beleuchten insbesondere von öffentlichen Gebäuden oder Gebäudekomplexen genutzt werden, weisen aus Sicherheitsgründen in der Regel eine so genannte Notlichtfunktion auf. Im Falle eines Notfalls, der beispielsweise zu einem Ausfall der Allgemeinbeleuchtung führt, werden die Leuchten des Notlicht-Systems aktiviert und nehmen einen dem Notlichtzustand entsprechenden Betriebszustand ein. Hierzu werden sie beispielsweise mit einer vorgegebenen, für diesen Notfall vorgesehenen Helligkeit betrieben, um einerseits eine gewisse Grundbeleuchtung sicherzustellen und andererseits Personen das sichere Verlassen des Gebäudes oder Gebäudekomplexes zu ermöglichen.

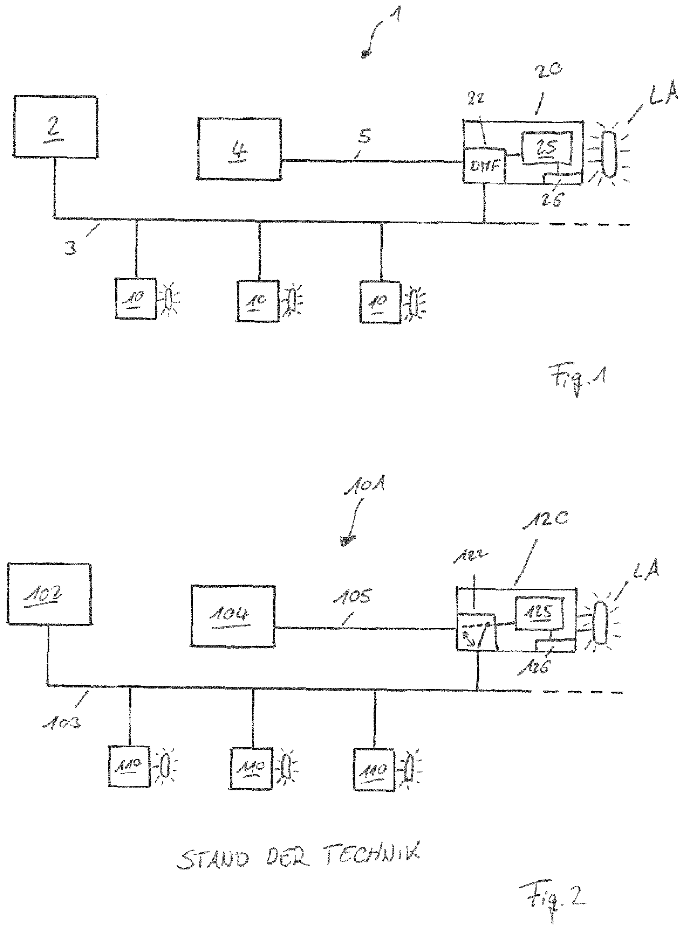

Zwar ist es durchaus bekannt, einzelne Leuchten ausschließlich für das Notlicht-System zu nutzen, wobei dann diese Leuchten während eines Normalbetriebs des Beleuchtungssystems nicht aktiv sind, bevorzugt ist jedoch mittlerweile vorgesehen, dass die Notlichtfunktion von Leuchten übernommen wird, welche während eines Normalbetriebs sich in ganz normaler Weise wie auch alle anderen Leuchten des Beleuchtungssystems verhalten. Das heißt, auch diesen Notlicht-Leuchten können während des Betriebs des Systems von einer zentralen Steuereinheit aus Befehle übermittelt werden, mit deren Hilfe die Lichtabgabe der Leuchte abgestimmt auf die anderen Leuchten eingestellt werden kann. Derartige Steuerbefehle werden beispielsweise oftmals entsprechend dem DALI-Standard übertragen.
Ein aus dem Stand der Technik bekannter und üblicher Aufbau eines entsprechenden Beleuchtungssystems mit Notlichtfunktion ist dann wie in Figur 2 dargestellt.

Das allgemein mit dem Bezugszeichen 101 versehene Beleuchtungssystem weist hierbei eine zentrale Steuereinheit 102 auf, welche über eine Steuerleitung 103 mit mehreren Leuchten 110 bzw. 120 verbunden ist. Die Steuerleitung 103 bildet beispielsweise einen so genannten DALI-Bus, das heißt, bei diesem System 101 werden die Leuchten 110, 120 von der zentralen Steuereinheit 102 über DALI-Befehle angesteuert.

Während es sich bei den Leuchten 110 um normale Leuchten handelt, die ausschließlich für einen Betrieb während eines Normalzustands des Beleuchtungssystems 101 vorgesehen sind, bildet die Leuchte 120 zusätzlich eine Notlicht-Leuchte. Sie ist hierzu über eine weitere Steuerleitung 105 mit einer Notlicht-Versorgungs- und Steuereinheit 104 verbunden, welche für die Aktivität des Notlicht-Systems verantwortlich ist. An die Steuerleitung 105 des Notlicht-Systems sind selbstverständlich üblicherweise mehrere Leuchten angeschlossen, welche verteilt über den gesamten Bereich des Beleuchtungssystems 101 angeordnet sind.

Die Notlicht-Leuchte 120 ist in diesem Fall also mit zwei Steuereinheiten verbunden, einerseits mit der zentralen Steuereinheit 102, die für den Normalbetrieb des Beleuchtungssystems 101 verantwortlich ist, sowie andererseits mit der Steuereinheit 104 des Notlicht-Systems. Von diesen Steuereinheiten 102 bzw. 104 übermittelte Steuerbefehle werden dann von dem Betriebsgerät 125 der Leuchte 120 in geeigneter Weise umgesetzt, um die Lichtquelle LA der Leuchte 120 in entsprechender Weise zu betreiben. Um im Falle eines Ausfalls der - aus Gründen der Übersichtlichkeit nicht dargestellten - Stromversorgung nach wie vor einen Notlichtbetrieb zu ermöglichen, wird die Notlicht-Leuchte 120 aus der zentralen Notlicht-Versorgungs- und Steuereinheit 104 versorgt.

Die Entscheidung, die Befehle welcher Steuereinheit 102 bzw. 104 letztendlich von dem Betriebsgerät 125 der Notlicht-Leuchte 120 umgesetzt werden, erfolgt durch eine dem Betriebsgerät 125 vorgeschaltete Umschalteinheit 122. Wie schematisch dargestellt kann durch die Umschalteinheit 122 wahlweise eine Verbindung zwischen Lampenbetriebsgerät 125 und dem DALI-Bus 103 oder Lampenbetriebsgerät 125 und der Steuerleitung 105 des Notlicht-Systems hergestellt werden. Während des Normalbetriebs des Beleuchtungssystems 101 liegt eine Verbindung zum DALI-Bus 103 vor, bei Aktivität des Notlicht-Systems hingegen wird durch die Umschalteinheit 122 auf eine Verbindung zu der Steuerleitung 105 des Notlicht-Systems gewechselt.

Bei diesem bekannten in Figur 2 dargestellten System ergibt sich nunmehr das Problem, dass zur Gewährleistung eines ordnungsgemäßen Betriebs des Notlicht-Systems dieses in regelmäßigen Abständen so genannte Funktionstests oder Betriebsdauertests durchführen muss. Im Rahmen eines Funktionstests wird überprüft, ob die zugehörigen Notlicht-Leuchten wie vorgesehen im Falle eines Notzustands betriebsbereit sind und insbesondere den für den Notfall vorgesehenen Betriebszustand annehmen. Ein derartiger Test wird regelmäßig und über einen Zeitraum von etwa zwei bis zehn Minuten durchgerührt. Im Rahmen des deutlich länger andauernden Betriebsdauertests wird zusätzlich auch überprüft, ob beispielsweise der Akkumulator der zentralen Notlicht-Versorgungs- und Steuereinheit 104 ordnungsgemäß funktioniert.

Unabhängig von der Art des Tests ergibt sich allerdings das Problem, dass während einer Aktivität des Notlicht-Systems durch die Umschalteinheit 122 eine Unterbrechung der Verbindung zwischen DALI-Bus 103 und Lampenbetriebsgerät 125 erfolgt. Für die zentrale Steuereinheit 102 stellt sich dies als Fehlzustand der entsprechenden Leuchte 120 dar, da diese nicht mehr kontaktiert werden kann. Darüber hinaus besteht das Problem, dass nach Beendigung der Aktivität des Notlicht-Systems und einem Umschalten durch die Einheit 122 zur Wiederherstellung der Verbindung zwischen DALI-Bus 103 und Betriebsgerät 125 die Leuchte 120 möglicherweise einen undefinierten Zustand einnimmt, da sie möglicherweise während der Aktivität des Notlicht-Systems von der zentralen Steuereinheit 102 übermittelte Befehle nicht empfangen und entsprechend umsetzen konnte. Dies kann zu einer unbefriedigenden Beleuchtungssituation führen, welche bei dem System gemäß dem Stand der Technik nur dadurch vermieden werden kann, dass unmittelbar nach Beenden der Aktivität des Notlicht-Systems die zentrale Steuereinheit 102 aktiv die betroffenen Leuchten, also alle Notlicht-Leuchten neu ansteuert.

Des Weiteren sind auch aus der EP 1 578 176 A2 und der EP 2 194 762 A1 Beleuchtungssysteme mit entsprechenden Notlichtfunktionen bekannt. Der EP 1 619 935 A2 kann außerdem ein Notlichtvorschaltelement mit einer digital adressierbaren Steuerschnittstelle entnommen werden.

Der vorliegenden Erfindung liegt die Aufgabenstellung zugrunde, die oben genannten Probleme zu vermeiden.

Die Aufgabe wird durch ein Beleuchtungssystem mit den Merkmalen des Anspruchs 1 und durch ein Verfahren mit den Merkmalen des Anspruchs 6 gelöst. Gemäß einem ersten Aspekt der vorliegenden Erfindung wird ein Beleuchtungssystem mit mehreren Leuchten, die von einer zentralen Steuereinheit durch Übermittlung von Steuerbefehlen angesteuert werden, vorgeschlagen, wobei mindestens eine der Leuchten als Notlicht-Leuchte Bestandteil eines Notlicht-Systems ist, welches eine Notlicht-Versorgungs- und Steuereinheit zum Ansteuern der Notlicht-Leuchte aufweist, und wobei der Notlicht-Leuchte ein Speichermodul zugeordnet ist, welches während einer Aktivität des Notlicht-Systems eine Kommunikationsverbindung mit der zentralen Steuereinheit aufrecht erhält. Die zentrale Steuereinheit ist über eine Steuerleitung mit der Leuchte verbunden und die Notlicht-Versorgungs- und Steuereinheit ist über eine Versorgungs- und Steuerleitung mit der Leuchte verbunden. Außerdem wird erfindungsgemäß ein Verfahren zum Betreiben eines Beleuchtungssystem mit mehreren Leuchten, die von einer zentralen Steuereinheit durch Übermittlung von Steuerbefehlen angesteuert werden, vorgeschlagen, wobei mindestens eine der Leuchten als Notlicht-Leuchte Bestandteil eines Notlicht-Systems ist, welches eine Notlicht-Versorgungs- und Steuereinheit zum Ansteuern der Notlicht-Leuchte aufweist, und wobei mit Hilfe eines der Notlicht-Leuchte zugeordneten Speichermoduls während einer Aktivität des Notlicht-Systems eine Kommunikationsverbindung mit der zentralen Steuereinheit aufrecht erhalten wird.

Die erfindungsgemäße Lösung beruht also auf dem Gedanken, anstatt der Umschalteinheit ein neuartiges Speichermodul einzusetzen, welches der Notlicht-Leuchte zugeordnet und dazu ausgebildet ist, während einer Aktivität des Notlicht-Systems eine Kommunikationsverbindung mit der zentralen Steuereinheit des Beleuchtungssystems aufrechtzuerhalten. Es ergibt sich dementsprechend dann nicht mehr das Problem, dass beispielsweise während der Durchführung eines Betriebsdauertests die zentrale Steuereinheit des Beleuchtungssystems einen Ausfall der Notlicht-Leuchte feststellt. Stattdessen ist aus Sicht der zentralen Steuereinheit die Notlicht-Leuchte nach wie vor aktiv bzw. erreichbar, sodass hier die Generierung eine Fehlermeldung vermieden wird.

Erfindungsgemäß ist das Speichermodul dazu ausgebildet, der zugehörigen Notlicht-Leuchte nach Beendigung der Aktivität des Notlicht-Systems eine Information bezüglich des Betriebs der Leuchte zur Verfügung zu stellen. Hierdurch kann vermieden werden, dass beispielsweise nach Beendigung eines Tests des Notlicht-Systems die Leuchte einen undefinierten Zustand annimmt. Dabei ist vorgesehen, dass es sich bei der von dem Speichermodul zur Verfügung gestellten Information um den Betriebszustand der Leuchte vor Aktivierung des Notlicht-Systems handelt. Für den Fall allerdings, dass während der Aktivität des Notlicht-Systems, also beispielsweise während der Durchführung des Funktionstests, von der zentralen Steuereinheit ein neuer, die Leuchte betreffender Befehl übermittelt wird, bildet dieser die von dem Speichermodul der Leuchte zur Verfügung gestellte Information. Das heißt, die Leuchte führt zwar ordnungsgemäß den Funktionstest des Notlicht-Systems durch, nimmt danach allerdings unmittelbar den von der zentralen Steuereinheit ihr zugedachten Betriebszustand an.

Vorzugsweise ist das Speichermodul Bestandteil der Leuchte, insbesondere Bestandteil eines Betriebsgeräts der Leuchte. Alternativ hierzu kann das Speichermodul allerdings auch in der Notlicht-Versorgungs- und Steuereinheit angeordnet sein. Diese Variante basiert darauf, dass auch beim Stand der Technik die zuvor beschriebenen Umschalteinheiten wahlweise unmittelbar in der Notlicht-Leuchte oder der Zentrale des Notlicht-Systems angeordnet sein können.

Bei den von der zentralen Steuereinheit übermittelten Steuerbefehlen handelt es sich vorzugsweise um Befehle entsprechend dem bereits mehrfach erwähnten DALI-Standard. Unter einer Aktivität des Notlicht-Systems wird dabei sowohl ein klassischer Notlichtbetrieb als auch ein Funktionstest oder ein Betriebsdauertest verstanden.

Selbstverständlich kommen die erfindungsgemäß sich ergebenden Vorteile insbesondere bei Durchführung eines Funktionstests oder eines Betriebsdauertests des Notlicht-Systems zum Tragen, da hier nach Abschluss des Tests das Beleuchtungssystem möglichst umgehend wieder einen normalen Betriebszustand annehmen sollte.

Nachfolgend soll die Erfindung anhand der beiliegenden Zeichnung näher erläutert werden. Es zeigen:
- Figur 1: schematisch ein erfindungsgemäß ausgestaltetes Beleuchtungssystem mit Notlichtfunktion sowie
- Figur 2: den Aufbau eines Beleuchtungssystems mit Notlichtfunktion gemäß dem Stand der Technik.

Das in Figur 1 dargestellte, allgemein mit dem Bezugszeichen 1 versehene erfindungsgemäße Beleuchtungssystem gleicht in seinem Aufbau grundsätzlich dem oben besprochenen, in Figur 2 dargestellten Beleuchtungssystem entsprechend dem Stand der Technik. Auch hier ist also eine zentrale Steuereinheit 2 vorgesehen, die über eine Steuerleitung 3, im vorliegenden Fall über einen so genannten DALI-Bus mit Leuchten 10 bzw. 20 verbunden ist, wobei die Leuchte 20 zusätzlich Bestandteil eines Notlicht-Systems ist. Dieses weist eine Notlicht-Versorgungs- und Steuereinheit 4 auf, welche über eine Versorgungs- und Steuerleitung 5 mit der Leuchte 20 sowie gegebenenfalls mit weiteren Leuchten des Beleuchtungssystems 1 verbunden ist. Intern weist die erfindungsgemäß ausgestaltete Notlicht-Leuchte 20 wiederum ein Betriebsgerät 25 zum Betreiben einer Lichtquelle LA auf. Ferner ist auch hier ein Akkumulator 26 vorgesehen.

Anstelle der zuvor beschriebenen Umschalteinheit 122 ist nunmehr allerdings dem Betriebsgerät 25 vorgeschaltet ein Speichermodul 22 vorgesehen. Auch dieses Modul 22 ist zunächst für eine Auswahl dahingehend verantwortlich, welche Steuerbefehle dem Betriebsgerät 25 übermittelt werden. Insofern erfüllt auch das Speichermodul 22 eine Umschaltfunktion, als während eines Normalbetriebs des Beleuchtungssystems 1 die über den DALI-Bus eintreffenden Steuerbefehle an das Betriebsgerät 25 weitergeleitet werden, während hingegen im Falle einer Aktivierung des Notlicht-Systems die über die Steuerleitung 5 von der Notlicht-Versorgungs- und Steuereinheit 4 übermittelten Befehle weitergeleitet werden. Das entsprechende Umschalten wird in der Regel durch die Steuereinheit 4 des Notlicht-Systems initiiert, da die Befehle des Notlicht-Systems Vorrang vor den Befehlen bezüglich eines Normalbetriebs des Beleuchtungssystems 1 haben sollten.

Im Gegensatz zum Stand der Technik erfolgt durch das Speichermodul 22 allerdings kein reines Umschalten, derart, dass im Falle einer Weiterleitung der Befehle der Notlicht-Versorgungs- und Steuereinheit 4 die Leuchte 20 vollständig von dem DALI-Bus 3 abgekoppelt wird. Stattdessen besteht eine erste Funktion des Speichermoduls 22 darin, eine Kommunikation mit der zentralen Steuereinheit 2 auch während einer Aktivität des Notlicht-Systems aufrechtzuerhalten. Aus Sicht der zentralen Steuereinheit 2 ist somit die Leuchte 20 auch während des aktiven Notlicht-Systems dauerhaft mit dem DALI-Bus 3 verbunden und es wird also nicht irrtümlicherweise eine Fehlermeldung bezüglich der Ansteuerbarkeit der Leuchte 20 generiert.

Zusätzlich wird allerdings das erfindungsgemäße Speichermodul 20 auch dazu genutzt, nach Beenden der Aktivität des Notlicht-Systems einen undefinierten Betriebszustand der Leuchte 20 zu verhindern. Das Speichermodul 20 weist hierzu eine sogenannte DALI-Memory-Funktion (DMF) auf. Das heißt, das Modul 22 speichert eine Information bezüglich des Betriebszustands der Leuchte 20 und stellt diese Information dem Betriebsgerät 25 nach Beendigung der Aktivität des Notlicht-Systems zur Verfügung. Auf Basis dieser Information kann dann das Betriebsgerät 25 unmittelbar die Lichtquelle LA wieder ansteuern, sodass die Leuchte 20 einen definierten Betriebszustand einnimmt.

Die in dem Speichermodul 22 gespeicherte Information kann dabei insbesondere den Betriebszustand der Leuchte 20 betreffen, den diese vor der Aktivität des Notlicht-Systems einnahm. In diesem Fall ist also zunächst vorgesehen, dass die Leuchte 20 nach Abschluss eines Funktionstests sofort wieder den Betriebszustand einnimmt, den sie vor dem Start des Tests hatte. In Ergänzung dieses Konzepts kann allerdings vorgesehen sein, dass für den Fall, dass während des Zeitraums, zu dem das Notlicht-System aktiv ist, von der zentralen Steuereinheit 2 des Beleuchtungssystems 1 ein DALI-Befehl übermittelt wird, der die Leuchte 20 betrifft, dieser in dem Speichermodul 22 entsprechend abgespeichert wird und die ursprünglich gespeicherte Information ersetzt. Ist also durch die zentrale Steuereinheit 2 vorgesehen, dass die Leuchte 20 einen neuen Betriebszustand einnehmen soll, beispielsweise eine einem neuen gewünschten Beleuchtungsszenario entsprechende Helligkeit annehmen soll, so wird diese Information in dem Speichermodul 22 zwischengespeichert und unmittelbar nach Beenden der Aktivität des Notlicht-Systems umgesetzt. Hierdurch ist sichergestellt, dass die Leuchte 20 unmittelbar nach Wiederaufnahme eines Normalbetriebs die Helligkeit annimmt, die ihr von der zentralen Steuereinheit 2 zugewiesen wurde.

Durch die Nutzung des Speichermoduls 22 können also in sehr einfacher aber eleganter Weise die sich beim Stand der Technik ergebenden Probleme vermieden werden. Ein Vorteil der erfindungsgemäßen Lösung besteht dabei auch darin, dass zur Umsetzung des erfindungsgemäßen Gedankens keine gravierenden Eingriffe in die Ausgestaltung des Beleuchtungssystems insgesamt erforderlich sind. Stattdessen kann auf die bisherige Struktur nahezu vollständig zurückgegriffen werden und es ist lediglich ein Austausch der klassischen Umschalteinheit gegen die neuen, erfindungsgemäßen Speichermodule erforderlich. Dabei kann es sich bei diesen Speichermodulen - wie dargestellt - um separate Einheiten handeln, die in der zugehörigen Leuchte angeordnet sind. Denkbar wäre allerdings auch, diese im Bereich der Steuereinheit des Notlicht-Systems anzuordnen. Auch eine derartige Struktur ist im Stand der Technik oftmals vorgesehen, wobei hier dann die entsprechenden Steuerleitungen des normalen Beleuchtungssystems über die Zentrale des Notlicht-Systems geschleift werden. Selbstverständlich wäre auch denkbar, dass erfindungsgemäße Speichermodul in das Lampenbetriebsgerät zu integrieren.

## Patentansprüche

1. Beleuchtungssystem (1) mit mehreren Leuchten (10, 20), die von einer zentralen Steuereinheit (2) durch Übermittlung von Steuerbefehlen angesteuert werden,
wobei mindestens eine der Leuchten (10, 20) als Notlicht-Leuchte (20) Bestandteil eines Notlicht-Systems ist, welches eine Notlicht-Versorgungs- und Steuereinheit (4) zum Ansteuern der Notlicht-Leuchte (20) aufweist,
wobei der Notlicht-Leuchte (20) ein Speichermodul (22) zugeordnet ist, welches während einer Aktivität des Notlicht-Systems eine Kommunikationsverbindung mit der zentralen Steuereinheit (2) aufrecht erhält,
wobei das Speichermodul (22) dazu ausgebildet ist, der zugehörigen Notlicht-Leuchte (20) nach Beendigung der Aktivität des Notlicht-Systems eine Information bezüglich des Betriebs der Leuchte (20) zur Verfügung zu stellen,
wobei es sich bei der von dem Speichermodul (22) zur Verfügung gestellten Information um den Betriebszustand der Leuchte (20) vor Aktivierung des Notlicht-Systems handelt, wobei für den Fall, dass während der Aktivität des Notlicht-Systems von der zentralen Steuereinheit (2) ein neuer, die Leuchte (20) betreffender Steuerbefehl übermittelt wird, dieser die von dem Speichermodul (22) zur Verfügung gestellte Information bildet,
**dadurch gekennzeichnet,**
**dass** die zentrale Steuereinheit (2) über eine Steuerleitung (3) mit der Notlicht-Leuchte (20) verbunden ist und die Notlicht-Versorgungs- und Steuereinheit (4) über eine Versorgungs- und Steuerleitung (5) mit der Notlicht-Leuchte (20) verbunden ist.

2. Beleuchtungssystem nach einem der vorherigen Ansprüche,
**dadurch gekennzeichnet,**
**dass** das Speichermodul (22) Bestandteil der Leuchte (20), insbesondere Bestandteil eines Betriebsgeräts (25) der Leuchte (20) ist.

3. Beleuchtungssystem nach Anspruch 1,
**dadurch gekennzeichnet,**
**dass** das Speichermodul (20) in der Notlicht-Versorgungs- und Steuereinheit (4) angeordnet ist.

4. Beleuchtungssystem nach einem der vorherigen Ansprüche,
**dadurch gekennzeichnet,**
**dass** es sich bei den von der zentralen Steuereinheit (2) übermittelten Steuerbefehlen um Befehle entsprechend dem DALI-Standard handelt.

5. Beleuchtungssystem nach einem der vorherigen Ansprüche,
**dadurch gekennzeichnet,**
**dass** es sich bei einer Aktivität des Notlicht-Systems um einen Notlichtbetrieb, einen Funktionstest oder einen Betriebsdauertest handelt.

6. Verfahren zum Betreiben eines Beleuchtungssystem (1) mit mehreren Leuchten (10, 20), die von einer zentralen Steuereinheit (2) durch Übermittlung von Steuerbefehlen angesteuert werden,
wobei mindestens eine der Leuchten (10, 20) als Notlicht-Leuchte (20) Bestandteil eines Notlicht-Systems ist, welches eine Notlicht-Versorgungs- und Steuereinheit (4) zum Ansteuern der Notlicht-Leuchte aufweist,
wobei mit Hilfe eines der Notlicht-Leuchte (20) zugeordneten Speichermoduls (22) während einer Aktivität des Notlicht-Systems eine Kommunikationsverbindung mit der zentralen Steuereinheit (2) aufrecht erhalten wird,
wobei der Notlicht-Leuchte (20) nach Beendigung der Aktivität des Notlicht-Systems eine Information bezüglich des Betriebs der Leuchte (20) zur Verfügung gestellt wird, wobei es sich bei der zur Verfügung gestellten Information um den Betriebszustand der Leuchte (20) vor Aktivierung des Notlicht-Systems handelt, wobei für den Fall, dass während der Aktivität des Notlicht-Systems von der zentralen Steuereinheit (2) ein neuer, die Leuchte (20) betreffender Steuerbefehl übermittelt wird, dieser die zur Verfügung gestellte Information bildet,
**dadurch gekennzeichnet,**
**dass** die zentrale Steuereinheit (2) über eine Steuerleitung (3) mit der Notlicht-Leuchte (20) verbunden ist und die Notlicht-Versorgungs- und Steuereinheit (4) über eine Versorgungs- und Steuerleitung (5) mit der Notlicht-Leuchte (20) verbunden ist.

7. Verfahren nach Anspruch 6,
**dadurch gekennzeichnet,**
**dass** es sich bei den von der zentralen Steuereinheit (2) übermittelten Steuerbefehlen um Befehle entsprechend dem DALI-Standard handelt.

8. Verfahren nach Anspruch 6 oder 7,
**dadurch gekennzeichnet,**
**dass** es sich bei einer Aktivität des Notlicht-Systems um einen Notlichtbetrieb, einen Funktionstest oder einen Betriebsdauertest handelt.

## Claims

1. Lighting system (1) with a plurality of luminaires (10, 20), which are controlled by a central control unit (2) via transmission of control commands,
wherein at least one of the luminaires (10, 20) is an emergency luminaire (20) and a part of an emergency lighting system, which has an emergency light supply and a control unit (4) for controlling the emergency luminaire (20),
wherein the emergency luminaire (20) is associated with a storage module (22) which maintains a communication link with the central control unit (2) during an activity of the emergency lighting system,
wherein the storage module (22) is designed to provide the associated emergency luminaire (20) with information regarding the operation of the emergency luminaire (20) after the end of the activity of the emergency light system,
wherein the information provided by the storage module (22) represents the operating state of the luminaire (20) before the emergency lighting system is activated, wherein, in the event that the central control unit (2) transmits a new control command related to a luminaire (20) during the activity of the emergency lighting system, it forms the information provided by the storage module (22),
**characterized in that**
the central control unit (2) is connected to the emergency luminaire (20) via a control line (3), while the emergency light supply and control unit (4) are connected to the emergency luminaire (20) via a supply and control line (5).

2. Lighting system according to one of the preceding claims,
**characterized in that**
the storage module (22) is part of the luminaire (20), in particular a component of an operating device (25) of the luminaire (20).

3. Lighting system according to claim 1,
**characterized in that**
the storage module (22) is arranged in the emergency lighting, supply and control unit (4).

4. Lighting system according to one of the preceding claims,
**characterized in that**
the control commands transmitted by the central control unit (2) are commands according to the DALI standard.

5. Lighting system according to one of the preceding claims,
**characterized in that**
an activity of the emergency lighting system is an emergency lighting operation, a functional test or an endurance test.

6. Method for operating a lighting system (1) with a plurality of luminaires (10, 20), which are controlled by a central control unit (2) by transmission of control commands,
wherein at least one of the luminaires (10, 20) is an emergency luminaire (20) and a part of an emergency lighting system which has an emergency lighting supply and a control unit (4) for activating the emergency luminaire,
wherein a communication link with the central control unit (2) is maintained during an activity of the emergency lighting system with the aid of a storage module (22) associated with the emergency luminaire (20),
wherein the emergency luminaire (20) is provided with information regarding the operation of the luminaire (20) after the end of the activity of the emergency lighting system,
wherein the information provided is the operating state of the luminaire (20) before the emergency lighting system is activated,
wherein, in the event that a new control command related to a luminaire (20) is transmitted from the central control unit (2) during the activity of the emergency lighting system, it forms the information provided,
**characterized in that**
the central control unit (2) is connected to the emergency luminaire (20) via a control line (3), while the emergency lighting supply and control unit (4) are connected to the emergency luminaire (20) via a supply and control line (5).

7. Method according to claim 6,
**characterized in that**
the control commands transmitted by the central control unit (2) are commands according to the DALI standard.

8. Method according to claim 6 or 7,
**characterized in that**
an activity of the emergency lighting system is an emergency lighting operation, a functional test or an endurance test.

## Revendications

1. Système d'éclairage (1), avec plusieurs lampes (10, 20) qui sont pilotées par une unité de commande (2) centrale par transmission d'instructions de commande,
au moins une des lampes (10, 20) faisant partie, en tant que lampe d'éclairage de secours (20), d'un système d'éclairage de secours qui présente une unité d'alimentation et de commande d'éclairage de secours (4) destinée au pilotage de la lampe d'éclairage de secours (20),
un module de mémoire (22) étant affecté à la lampe d'éclairage de secours (20), qui maintient, pendant une activité du système d'éclairage de secours, une liaison de communication avec l'unité de commande (2) centrale,
le module de mémoire (22) étant constitué pour, une fois terminée l'activité du système d'éclairage de secours, mettre à disposition de la lampe d'éclairage de secours (20) correspondante une information concernant le fonctionnement de la lampe (20),
s'agissant, concernant l'information mise à disposition par le module de mémoire (22), de l'état de fonctionnement de la lampe (20) avant l'activation du système d'éclairage de secours, dans lequel, au cas où une nouvelle instruction de commande concernant la lampe (20) est transmise par l'unité de commande (2) centrale pendant l'activité du système d'éclairage de secours, cette instruction forme l'information mise à disposition par le module de mémoire (22),
**caractérisé en ce que**
l'unité de commande (2) centrale est raccordée à la lampe d'éclairage de secours (20) par le biais d'une ligne de commande (3), et l'unité d'alimentation et de commande d'éclairage de secours (4) est raccordée à la lampe d'éclairage de secours (20) par le biais d'une ligne d'alimentation et de commande (5).

2. Système d'éclairage selon l'une des revendications précédentes,
**caractérisé en ce que**
le module de mémoire (22) fait partie de la lampe (20), en particulier fait partie d'un appareil de commande (25) de la lampe (20).

3. Système d'éclairage selon la revendication 1,
**caractérisé en ce que**
le module de mémoire (22) est disposé dans l'unité d'alimentation et de commande d'éclairage de secours (4).

4. Système d'éclairage selon l'une des revendications précédentes,
**caractérisé en ce que,**
concernant les instructions de commande transmises par l'unité de commande (2) centrale, il s'agit d'instructions conformes au standard DALI.

5. Système d'éclairage selon l'une des revendications précédentes,
**caractérisé en ce que,**
concernant une activité du système d'éclairage de secours, il s'agit d'un mode d'éclairage de secours, d'un test de performance ou d'un test de durée de fonctionnement.

6. Procédé de fonctionnement d'un système d'éclairage (1) avec plusieurs lampes (10, 20) qui sont pilotées par une unité de commande (2) centrale par transmission d'instructions de commande,
au moins une des lampes (10, 20) faisant partie, en tant que lampe d'éclairage de secours (20), d'un système d'éclairage de secours qui présente une unité d'alimentation et de commande d'éclairage de secours (4) destinée au pilotage de la lampe d'éclairage de secours, une liaison de communication avec l'unité de commande (2) centrale étant maintenue à l'aide d'un module de mémoire (22) affecté à la lampe d'éclairage de secours (20) pendant une activité du système d'éclairage de secours, une information concernant le fonctionnement de la lampe (20) étant mise à la disposition de la lampe d'éclairage de secours (20) une fois terminée l'activité du système d'éclairage de secours,
s'agissant, concernant l'information mise à disposition, de l'état de fonctionnement de la lampe (20) avant l'activation du système d'éclairage de secours, dans lequel, au cas où une nouvelle instruction de commande concernant la lampe (20) est transmise par l'unité de commande (2) centrale pendant l'activité du système d'éclairage de secours, cette instruction forme l'information mise à disposition,
**caractérisé en ce que**
l'unité de commande (2) centrale est raccordée à la lampe d'éclairage de secours (20) par le biais d'une ligne de commande (3), et l'unité d'alimentation et de commande d'éclairage de secours (4) est raccordée à la lampe d'éclairage de secours (20) par le biais d'une ligne d'alimentation et de commande (5).

7. Procédé selon la revendication 6,
**caractérisé en ce que,**
concernant les instructions de commande transmises par l'unité de commande (2) centrale, il s'agit d'instructions conformes au standard DALI.

8. Procédé selon la revendication 6 ou 7,
**caractérisé en ce que,**
concernant une activité du système d'éclairage de secours, il s'agit d'un mode d'éclairage de secours, d'un test de performance ou d'un test de durée de fonctionnement.
